# EUROPEAN PATENT SPECIFICATION

(11) **EP 0 208 567 B1**
(45) Date of publication and mention of the grant of the patent: **21.04.1993**
(21) Application number: 86401144.0
(22) Date of filing: 29.05.1986
(51) Int. Cl.: C01B 33/02

(54) **Method and apparatus for preparing high-purity metallic silicon**
Verfahren und Vorrichtung zum Herstellen von metallischem Silicium hoher Reinheit
Procédé et appareil pour la préparation de silicium métallique de haute pureté

(30) Priority: 29.05.1985 JP 117461/85
(43) Date of publication of application: 14.01.1987
(73) Proprietor: KAWASAKI STEEL CORPORATION, Chuo-Ku, Kobe-City Hyogo 651 (JP)
(72) Inventor: Aratani, Fukuo, Chiba-shi Chiba-ken (JP); Fukutake, Tsuyoshi, Chiba-shi Chiba-ken (JP)
(74) Representative: Nony, Michel

(56) References cited:
- FR-A- 1 310 789
- ELEKTROWÄRME INTERNATIONAL., vol. 34, no. B2, April 1976, pages B81-B84, Essen, DE; G. RATH et al.: "Erzeugung von hochprozentigem Ferrosilicium und Silicium-Metall im Elektroreduktionsofen"

## Description

### BACKGROUND OF THE INVENTION

The present invention relates generally to a method and apparatus for preparing high-purity metallic silicon, such as is used in solar cells. More particularly, the invention relates to a method and apparatus for efficiently and economically preparing high-purity metallic silicon from powdered silicon dioxide.

Conventionally, metallic silicon or ferrosilicon has been prepared in arc furnaces from a mixture of silicon dioxide (silica) and carbon. In order to ensure proper ventilation and to improve the efficiency of the reduction reaction in the high temperature region of the furnace, it has been considered essential to use large grains or masses of silicon dioxide.

On the other hand, there has recently been an increasing demand for metallic silicon of high purity, especially that having a purity higher than 99.999%. Such high-purity metallic silicon has numerous application, among which are solar cells. Refined natural silica is commonly used as the source of silicon dioxide. This refined silica is generally powdered or granular with a grain size of less than several milimeters. Therefore, in order to use this refined silica as the source silicon dioxide in the conventional apparatus, an extra process step is needed to sufficiently increase the grain size of the refined silica. This obviously leads to higher production costs and may also lower the purity of the source material.

In order to eliminate these problems in the prior art, an improved process for preparing high-purity metallic silicon has been proposed in Japanese Patent First Publication (Tokkai) Showa 57-111223. However, even the proposed improved process still requires that a part of the source silicon dioxide charge have a grain size of 3 to 12 milimeters.

Another improved process of preparing high-purity metallic silicon has been disclosed in the Japanese Patent First Publication (Tokkai) Showa 58-69713. In the disclosed process, the reaction between silica and carbon takes place in a high-temperature plasma jet which transports the resultant product onto a carbon layer. In this proposed process, a large amount of silicon carbide is created as a result of reaction with the carbon layer. The created silicon carbide tends to accumulate within the carbon layer and fill interstices between the carbon grains, which inhibits further reaction. Due to this defect, the process proposed in the Japanese Patent First Publication 58-69713 is still not useful in the manufacture of high-purity metallic silicon.

Therefore, it is an object of the present invention to provide a novel process and apparatus for preparing high-purity metallic silicon which can use fine-grained silicon dioxide without further preparatory steps for increasing grain size.

In order to accomplish the aforementioned and other objects, a process for preparing high-purity metallic silicon comprises a step of preparing a mixture of at least one of carbon and carbon containing substance and at least one of silicon dioxide and silicon carbide, a step of charging the resulting mixture into an arc furnace, and directly injecting a material including silicon dioxide and silicon oxide into a high temperature region in which the silicon oxides are reduced to create metallic silicon.

Directly injecting the silicon dioxide and silicon oxide material into the high-temperature region of the furnace charged with the aforementioned mixture induces a reaction between the silicon dioxide or silicon oxide and carbon or silicon carbide to create metallic silicon or silicon oxide.

An apparatus for implementing the aforementioned process, according to the present invention, includes a nozzle for blowing the silicon dioxide or silicon oxide. The nozzle has an end directed at the arcing region between a pair of electrodes of the arc furnace.

As is conventionally well known, the overall reaction can be expressed in the following formula (1):

SiO₂ + 2C → Si + 2CO (1)

However, in fact, during the reaction expressed in the formula (1), it is believed that the following reactions occur concurrently:

SiO₂ + C → SiO + CO (2)

SiO + 2C → SiC + CO (3)

SiO₂ + 3C → SiC + 2CO (4)

SiO + C → Si + CO (5)

SiC + SiO₂ → Si + SiO + CO (6)

Si + SiO₂ → 2SiO (7)

SiO + SiC → 2Si + CO (8)

Since powdered silicon dioxide is used as a source material and charged into the furnace in which the foregoing reactions are to take place, a large amount of silicon oxide is created during heating of the material in the reaction expressed in the formula (2), since powdered materials generally have higher dissociation constants than massive materials. Since silicon oxide has a relatively high vapor pressure, it tends to escape from the furnace and so lower the yield. Furthermore, as illustrated in the formula (4), the remaining silicon dioxide reacts with carbon to form silicon carbide which tends to accumulate at the bottom of the furnace and so lower production efficiency.

In the process according to the present invention as set forth above, a mixture of carbon and/or carbon-containing substance, such as pitch, or other organic compounds, and silicon carbide and/or silica is charged into the furnace. In addition, the powdered silicon dioxide is injected in aerosol form directly into the highest temperature region of the furnace. Injecting silicon dioxide into the highest temperature region promotes the reactions represented by the formulae (6), (7) or (2) and so creates silicon and gaseous silicon oxide. The gaseous silicon oxide then reacts according to the formulae (3) and (8) with the carbon or silicon carbide in the mixture, which itself produces silicon carbide according to formula (4), to form silicon and/or silicon carbide. The silicon carbide thus created again reacts with the silicon dioxide or silicon oxide injected into the arcing region of the furnace according to formula (6) and (8).

As will be appreciated herefrom, the process according to the present invention can achieve a remarkably high yield in the process of preparation of high-purity metallic silicon.

Furthermore, according to the present invention, by adjusting the quantity of the silica or silicon oxide source material injected into the furnace, the amount of silicon carbide in the bottom of the furnace needed to perform the reaction can be adjusted. This, in turn, means that by adjusting the quantity of the silica or silicon oxide source material appropriately, the quantity of silicon carbide accumulating in the bottom of the furnace can be controlled. This allows continuous, long-term operation of the furnace used for preparation of high-purity metallic silicon.

When the mixture to be supplied is carbon or carbon-containing substance and silicon carbide, the molar C/SiC ratio in the mixture is preferably equal to or greater than 1/2. On the other hand, when the mixture is carbon or carbon-containing substance and silica, the molar C/SiC ratio is preferable equal to or more than 3.5. The aforementioned molar C/SiC ratios keep silicon losses equal to or less than 15%. Comparison with silicon losses in the conventional art will show that the yield of metallic silicon in this process is significantly improved. The yield achieved by the present invention can be further improved by collecting and re-injecting gaseous silicon oxide which would otherwise escape to atmosphere.

In addition, by supplying the mixture of the carbon or carbon containing substance and silicon oxide or carbon or carbon-containing substance and silicon carbide, heat in the furnace, i.e. sensible heat of created gas, can be effectively utilized for heating the material, to reduce required reaction heat. This makes it easier to increase or hold the temperature at the arcing region and thus makes the silicon preparation process easier. Furthermore, this reduces the amount of gas generated in the furnace and so facilitates ventilation.

In practice, the source silicon oxide and/or silicon oxide in powder state is injected into the arcing region of the furnace together with a carrier gas which should be a non-oxidizing gas, such as Ar, H₂, N₂ or the like.

In the preferred embodiment, the nozzle for injecting the silicon dioxide and/or silicon oxide is made of carbon or silicon carbide. The injection end of the nozzle, which is subject to high temperatures, e.g. higher than 2000^{o}C, will tend to react with the injectant. However, after the nozzle has been reduced in length by the reaction to a given extent, the temperature at the point of injection will drop to the range of 1700 to 1800^{o}C, and so the nozzle will cease to react will the injectant. Therefore, no significant effect will arise from the reaction between the nozzle and other reagents in the high temperature region.

The charge mixture is provided in the form of pellets. Therefore, when the carbon or carbon containing substance and the silica making up the mixture are highly purified and thus in fine powdered state, sufficient grain size mass of those material is preferably pre-prepared by utilizing binder, such as sugur, phenolic plastic, starch, and the like. By enlarging the grain size, sufficient ventilation can be provided.

Furthermore, by employing external heating means, the high temperature reaction region in the furnace can be expanded. This further improves the yield of the high-purity metallic silicon. It also improves the overall efficiency of the operation. In the preferred embodiment, external heating means may perform heating by way of high-frequency induction heating. The external heating means may act on the peripheral walls of the furnace or directly on the charge, i.e. the mixture of carbon and/or carbon containing substance and silicon dioxide and/or silicon carbide, to heat same to a temperature equal to or higher than 1800^{o}C, and preferably to a temperature above 2000^{o}C.

The gaseous silicon oxide vented with the exhaust gas of the furnace may condense as the exhaust gas cools and thus can be collected by suitable means, such as a filter bag. However, due to the relatively small grain size of the condensed silicon oxide, the filter will tend to clog very easily. In order to solve this problem, the exhaust gas is injected into the stream of source silicon dioxide to be injected into the furnace to cause condensation of the silicon oxide on the periphery of the silicon dioxide, or otherwise the silicon dioxide is continuously introduced into the exhaust gas passage to induce condensation of the silicon oxide, whereby the silicon dioxide grains serve as nuclei of condensation of the silicon oxide. The silicon oxide condensing on the silica can be easily collected by means of a cyclone separator and re-injected into the furnace. This would be much more convenient for effectively collecting or recovering the silicon oxide than the conventional process. In this case, the top of the furnace, through which the exhaust gas vents, is preferably held at a temperature equal to or higher than 1700^{o}C so as to prevent the gaseous silicon oxide from condensing thereon.

The present invention will be understood more fully from the detailed description given herebelow and from the accompanying drawings of the preferred embodiments of the present invention, which however, should not be taken to limit the invention thereto, but are for explanation and understanding only.

In the drawings:
Fig. 1 is an illustration of part of the first embodiment of a high-purity metallic silicon preparation apparatus for implementing the preferred process according to the present invention;
Fig. 2 is a fragmentary illustration of the second embodiment of the apparatus according to the present invention;
Fig. 3 is a fragmentary illustration of the third embodiment of the apparatus of the invention;
Fig. 4 is a fragmentary illustration of the fourth embodiment of the apparatus of the invention;
Fig. 5 is a fragmentary illustration of the overall structure of the apparatus, for which the first to fourth embodiments are applicable; and
Fig. 6 is an illustration showing a major part of the apparatus as a modification of the structure in Fig. 5.

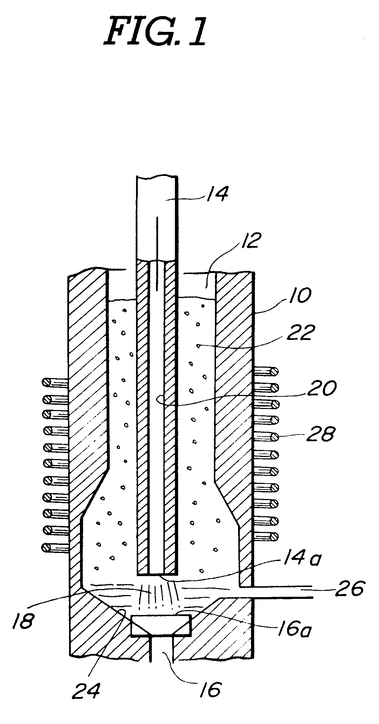

We refer now to the drawings, particularly to Fig. 1, which illustrates a major part of an arc furnace constituting the first embodiment of an apparatus for preparing high-purity metallic silicon and for implementing the preferred preparation process according to the present invention. A furnace body 10 is generally made of a graphitic refractory material and defines therein a reaction chamber 12. Upper and lower arc electrodes 14 and 16 are inserted within the reaction chamber 12. The upper and lower arc electrodes 14 and 16 have arcing ends 14a and 16a opposing each other across a predetermined gap 18. The gap 18 between the arcing ends 14a and 16a constitutes an arcing region.

The upper electrode 14 is in the form of a hollow cylindrical shell and thus defines a path 20 through which silicon dioxide or silicon oxide suspended in aerosol form in a carrier gas flows. The carrier gas is a non-oxidizing gas, such as Ar, H₂, N₂ and the like The path 20 opens at the arcing region 18 to discharge the mixture of the carrier gas and the powdered silicon dioxide and/or silicon oxide.

On the other hand, as a burden in the furnace, a mixture 22 of carbon and/or carbon containing substance and silica and/or silicon carbide is charged within the arcing chamber 12. The burden mixture 22 has to fill at least the lower region of the furnace including the arcing region so that the silicon dioxide and/or silicon oxide will react with the carbon and/or carbon containing substance in the burden mixture 22. The metallic silicon produced by the reaction collects in the bottom 24 of the reaction chamber 12 and flows out through an outlet 26 in the floor of the furnace body 10.

A heating coil 28 is wound around the furnace body 10. The heating coil 28 is designed to perform high-frequency induction heating. In the preferred embodiment, the heating coil 28 is arranged to heat the position of the burden mixture 22 above the arcing region to a temperature equal to or greater than 1800^{o}C, and more preferably equal to or greater than 2000^{o}C.

In practice, direct-current electrical power is supplied to one of the upper and lower electrodes 14 and 16 to induce arcing across the arcing region 18. A mixture of carbon and Silicon carbide in the form of pellets 8 mm to 15 mm in diameter is used as the burden mixture 22. The pellets have a silicon carbide layer on the inside and a carbon layer on the outside. Silicon dioxide suspended in H₂ gas serving as a carrier is injected into the arcing region 18.

Under these conditions, high-purity metallic silicon was prepared both with and without external heating of the burden by high-frequency induction heating. The general conditions of operation of the apparatus are as follows:
Molar C/SiC ratio is 1:1;
rate of injection of silicon dioxide is 5 kg/h;
rate of flow of H₂ is 3N m³/h; and
electrical power is 100 kW/h.

The inventive preparation processes were performed in the furnace of Fig. 1. The conventional reduction process used carbon pellets and silicon dioxide pellets and in a molar C/SiC ration of 2/1.

The following table I shows the results of the experimental reductions.

**TABLE I**

| | INVENTION (with external heating) | INVENTION (without external heating) | EXAMPLE FOR COMPARISON (conventional) |
|---|---|---|---|
| Burden Configuration | Pellet | Pellet | Pellet |
| C/SiC (molar ratio) | 1/1 | 1/1 | 2/1 |
| Pellet Supply Amount | 7kg/h | 5kg/h | 7kg/h |
| SiO₂ Blowing Amount | 7kg/h | 5kg/h | --- |
| Carrier Gas (H₂) | 3Nm³/h | 3Nm³/h | --- |
| Yield | 95% | 85% | 54% |
| Electricity | 19kW/kg-Si | 20kW/kg-Si | 35kW/kg-Si |

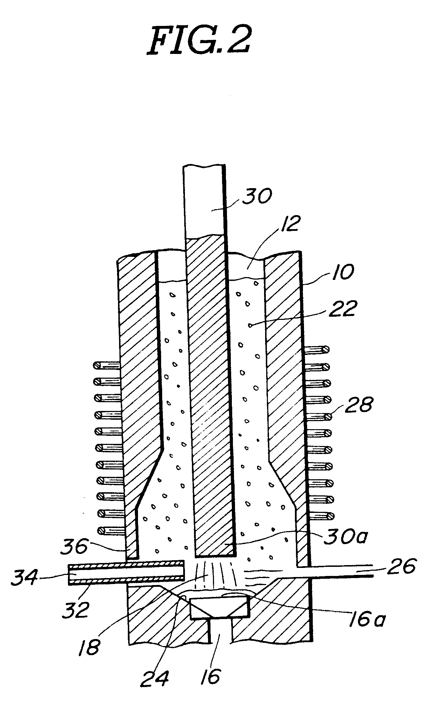

Figs. 2 to 4 show second to fourth embodiments of the high-purity metallic silicon preparing apparatus according to the present invention. In Figs. 2 to 4, the elements having the same construction and same function as in the apparatus of Fig. 1 will be represented by the same reference numerals, and detailed description of the common elements will be omitted in order to avoid redundancy.

In Fig. 2, an upper electrode 30 having an arcing end 30a opposes the arcing end 16a of the lower arc electrode 16. The upper arc electrode 30 is in the form of a solid bar and inserted into the reaction chamber through the top of the furnace body 10. In order to inject the source silicon dioxide or silicon oxide, a graphitic supply nozzle 32 with a passage 34 for the powdered silicon dioxide or silicon oxide suspended in the carrier gas escapes through a vertical wall 36 of the furnace body 10 essentially horizontally so that its inner end opposes the arcing region 18 between the opposing faces of the upper and lower arc electrodes 30 and 16.

In this arrangement, the upper solid electrode 30 will be stronger than the hollow cylindrical electrode of the first embodiment of Fig. 1. Therefore, despite the high temperatures in the reaction chamber, the upper electrode 30 will be more durable for long-term use.

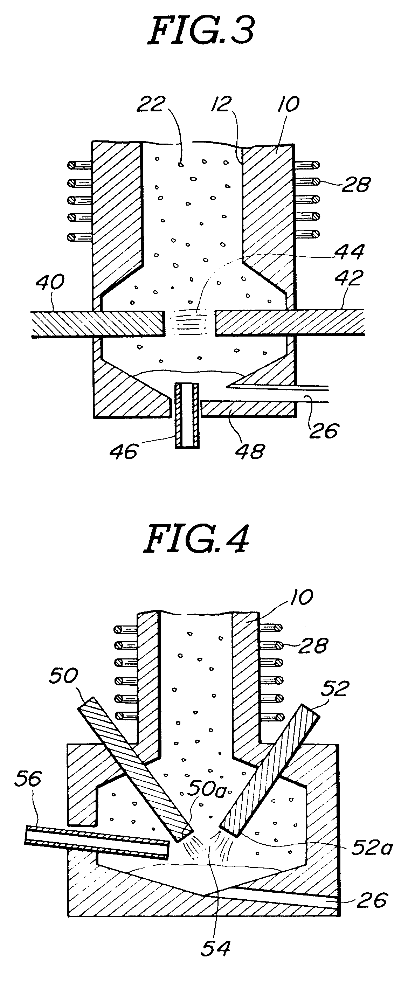

In Figs. 3, a pair of arc electrodes 40 and 42 are coaxially aligned horizontally. The arc electrodes 40 and 42 oppose each other at their inner ends across a given gap 44 which serves as the arcing region. A source supply nozzle 46 extends upwards through the floor 48 of the furnace body 10.

As in the second embodiment, the life-time of the electrodes can be extended by providing a separate source supply nozzle.

In Fig. 4, a pair of electrodes 50 and 52 extend into the reaction chamber 12. The electrodes 50 and 52 lie oblique to the vertical axis of the furnace body 10. The inner ends 50a and 52a oppose to each other indirectly to define an arcing region 54. A supply nozzle 56 leads toward the arcing region and injects the silicon dioxide or silicon oxide into the arcing region 54.

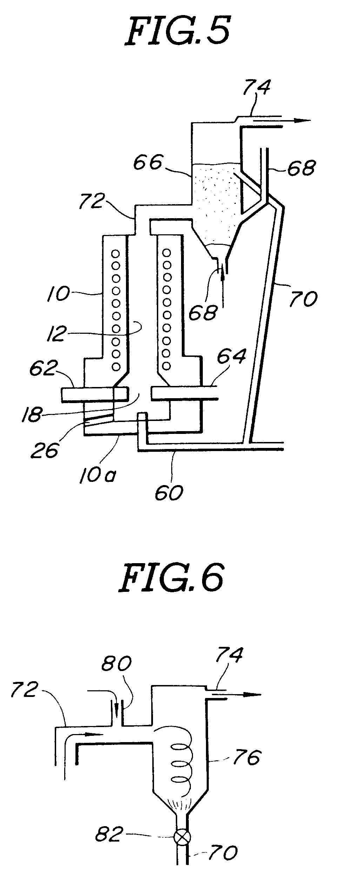

Fig. 5 shows the fifth embodiment of the high-purity metallic silicon preparing apparatus according to the invention. In this embodiment, the supply nozzle 60 projects into the reaction chamber 12 through the bottom 10a of the furnace body 10. Two arc electrodes 62 and 64 coaxially aligned horizontally and define the arcing region 18 between their opposing inner ends. This structure is essentially as described with reference to Fig. 3.

As shown in Fig. 5, the supply nozzle 60 is connected to a reservoir 66 filled with powdered silicon dioxide and/or silicon oxide. The reservoir 66 is connected to a carrier gas supply tube 68 which supplies the carrier gas, such as H₂. Therefore, the silicon dioxide or silicon oxide is carried by the carrier gas through a supply passage 70 and injected into the arcing region 18 through the supply nozzle 60. The reservoir 66 is also connected to the top of the reaction chamber 12 in the furnace body 10 through an exhaust tube 72 which introduces exhaust gas created in the reaction chamber and containing gaseous silicon oxide.

Gaseous silicon oxide is cooled within the reservoir 66 and condenses onto the silicon dioxide or silicon oxide particles. Therefore, the gaseous silicon oxide can be recirculated into the arcing region together with the silicon dioxide or silicon oxide. The exhaust gas separated from the silicon oxide component exits the reservoir 66 through an exhaust gas outlet 74.

With this arrangement, since the gaseous silicon oxide can be effectively scavenged by recirculation through the reaction chamber 12 with the silicon dioxide and/or silicon oxide, the preparation yield of the high-purity metallic silicon can be further improved.

Fig. 6 shows a modification to the fifth embodiment of the apparatus. In this modification, the supply nozzle 60 (not shown in Fig. 6) is connected to a cyclone 76 through the supply passage 70. The cyclone 76 is also connected to the top of the reaction chamber through the exhaust tube 72. The exhaust tube 72 has an inlet 80 for aerosol silicon dioxide and/or silicon oxide suspended in the carrier gas which mixes the latter with the exhaust gas into the cyclone.

The cyclone 76 is also provided with the exhaust gas outlet 74 through which the exhaust gas separated from the gaseous silicon oxide is vented. The cyclone 76 may also be provided with a supply control valve 82 for adjusting the amount of silicon dioxide and/or silicon oxide to be injected into the arcing region 18 so as to control the amount of silicon carbide created so that all of the silicon carbide can participate in the reaction and that no silicon carbide will accumulate in the bottom of the furnace.

Scavenging the gaseous silicon oxide created by the reaction in the furnace and recirculating sane into the arcing region together with the silicon dioxide and/or silicon oxide source, the yield can be further improved to approximately 99%.

Therefore, the present invention fulfills all of the object and advantages sought thertefor.

## Claims

1. A process for preparing high-purity metallic silicon from a first material selected from the group including carbon and carbon-containing substance, a second material selected from the group including silicon carbide and silicon dioxide and as a third material powdered silicon dioxide and silicon oxide, comprising the steps of :
forming a mixture of said first and second materials in the form of pellets and charging said mixture into a reaction chamber ;
generating an electrical arc at an arcing region between ends of a pair of electrodes opposing to each other and located in a lower portion of said reaction chamber ;
heating at least a part of said reaction chamber and said charged mixture by means of an external heating means located above said arcing region, thereby creating a high temperature region
injecting a stream of said third material in aerosol form via said high temperature region into said arcing region for inducing in said arcing region gaseous SiO generation reactions between said third material and said first or second material for inducing in said chamber, above said arcing region, solid SiC generation reactions between said gaseous SiO generated in said arcing region and said first material, and for inducing molten metallic Si generation reactions in said chamber above said arcing region between said gaseous SiO and said solid SiC generated in said reaction chamber ;
exhausting gases which are introduced to inject said stream of said third material and gases generated by said reactions in said reaction chamber through an outlet at the top of said reaction chamber; and
discharging the molten metallic Si generated in said reaction chamber through an outlet at the bottom of said chamber

2. A process as set forth in claim 1, which further comprises a step of collecting said gaseous SiO generated in said reaction chamber and exhausted through said outlet and re-injecting said collected SiO into said arcing region.

3. An apparatus for preparing high-purity metallic silicon by the method as set forth in claim 1 comprising :
a furnace body defining therein a reaction chamber (12) comprising at a lower portion thereof a pair of arc electrodes opposing to each other (14, 16 ; 30,16 ; 40,42; 50, 52 ; 62,64) said electrodes defining between their respective ends an arcing region of known dimensions (18, 44, 54), means (20, 32, 46, 56, 60) for directly injecting a stream of said third material in aerosol form via a high temperature region into said arcing region, an outlet (26) of molten metallic silicon which is located in a floor of said furnace body and connected to the outside of said furnace body, an external heating means (28) for creating said high temperature region located above said arcing region, and for heating a part of said reaction chamber together with said mixture, and an outlet (72) of gases located at the top of said reaction chamber.

4. An apparatus as set forth in claim 3, wherein said external heating means (28) performs high-frequency induction heating.

5. An apparatus as set forth in claim 3, which further comprises means (66, 76) for collecting said gaseous silicon oxide generated in said reaction chamber and exhausted through said outlet of gases and for re-injecting same into said arcing region.

6. An apparatus as set forth in claim 5, wherein said gaseous silicon oxide collecting and re-injecting means is adapted to induce said gaseous silicon oxide to condense prior to re-injection into said arcing region.

7. An apparatus as set forth in claim 6, wherein said gaseous silicon oxide collecting and re-injecting means is disposed within a material supply passage of said third material injecting means and induces said gaseous silicon oxide to condense onto particle in said stream of said third material prior to re-injection into said arcing region.

8. An apparatus as set forth in claim 3, wherein said third material injecting means comprises an injection nozzle inserted into said reaction chamber and having an inner end directed toward said arcing region.

9. An apparatus as set forth in claim 8, wherein said injection nozzle extends horizontally through a side wall of said furnace body.

10. An apparatus as set forth in claim 3, wherein said pair of arc electrodes are arranged in vertical alignment.

11. An apparatus as set forth in claim 3, wherein said pair of arc electrodes lie oblique to the horizontal plane and to each other.

12. An apparatus as set forth in claim 8, wherein said injection nozzle extends vertically through a floor of said furnace body.

13. An apparatus as set forth in claim 3, wherein said pair of arc electrodes are arranged in horizontal alignment.

## Patentansprüche

1. Verfahren zum Herstellen von metallischem Silicium hoher Reinheit aus einem ersten Material, ausgewählt aus der Gruppe, die Kohlenstoff und kohlenstoffhaltige Substanz einschließt, einem zweiten Material, ausgewählt aus der Gruppe, die Siliciumcarbid und Siliciumdioxid einschließt, und als drittes Material gepulvertes Siliciumdioxid und Siliciumoxid, umfassend die Schritte:
Bilden einer Mischung der ersten und zweiten Materialien in Form von Pellets und Beschicken einer Reaktionskammer mit dieser Mischung;
Erzeugen eines elektrischen Bogens in einem Bogenbereich zwischen den Enden eines Paares von einander gegenüberliegenden und in einem unteren Bereich der Reaktionskammer gelegenen Elektroden;
Erhitzen von mindestens einem Teil der Reaktionskammer und der eingegebenen Mischung mittels eines äußeren Heizmittels, das oberhalb des Bogenbereichs gelegen ist, wodurch ein Hochtemperaturbereich geschaffen wird;
Einspritzen eines Stroms des dritten Materials in Aerosolform durch den Hochtemperaturbereich in den Bogenbereich zum Induzieren von gasförmiges SiO erzeugenden Reaktionen zwischen dem dritten Material und dem ersten oder zweiten Material in dem Bogenbereich zum Induzieren in dieser Kammer oberhalb des Bogenbereichs von festes SiC erzeugenden Reaktionen zwischen dem in dem Bogenbereich erzeugten gasförmigen SiO und dem ersten Material und zum Induzieren von geschmolzenes metallisches Si erzeugenden Reaktionen in der Kammer oberhalb des Bogenbereichs zwischen dem gasförmigen SiO und dem in der Reaktionskammer erzeugten festen SiC;
Ableiten von Gasen, die eingeführt werden, um den Strom des dritten Materials einzuspritzen, und von Gasen, die durch die Reaktionen in der Reaktionskammer erzeugt werden, durch einen Auslaß an der Spitze der Reaktionskammer; und
Austragen des in der Reaktionskammer erzeugten geschmolzenen metallischen Siliciums durch einen Auslaß am Boden der Kammer.

2. Verfahren nach Anspruch 1, welches weiter einen Schritt des Sammelns des in der Reaktionskammer erzeugten und durch den Auslaß abgeleiteten gasförmigen SiO und das Wiedereinspritzen des gesammelten SiO in den Bogenbereich umfaßt.

3. Vorrichtung zum Herstellen von metallischen Silicium hoher Reinheit durch das Verfahren nach Anspruch 1 umfassend:
einen Ofenkörper, der darin eine Reaktionskammer (12) definiert , umfassend: in einem unteren Bereich ein Paar Elektroden, die einander gegenüberstehen (14, 16; 30, 16; 40, 42; 50 , 52; 62, 64), wobei diese Elektroden zwischen ihren jeweiligen Enden einen Bogenbereich bekannter Abmessungen (18, 44, 54) definieren, Mittel (20, 32, 46, 56, 60) zum direkten Einspritzen eines Stroms des dritten Materials in Aerosolform durch einen Hochtemperaturbereich in den Bogenbereich, einen Auslaß (26) von geschmolzenem metallischen Silicium, welcher an einem Boden des Ofenkörpers gelegen und mit der Außenseite des Ofenkörpers verbunden ist, ein äußeres Heizmittel (28) zum Schaffen des Hochtemperaturbereichs, das oberhalb des Bogenbereichs gelegen ist, und zum Erhitzen eines Teils der Reaktionskammer zusammen mit der Mischung, und einen Auslaß (72) von Gasen, der an der Spitze der Reaktionskammer gelegen ist.

4. Vorrichtung nach Anspruch 3, worin das äußere Heizmittel (28) durch Hochfrequenzinduktionsheizung wirkt.

5. Vorrichtung nach Anspruch 3, welche ferner Mittel (66, 76) zum Sammeln von gasförmigem Siliciumoxid, das in der Reaktionskammer erzeugt wird und durch den Auslaß der Gase abgeleitet wird, und zum Wiedereinspritzen dieser in den Bogenbereich umfaßt.

6. Vorrichtung nach Anspruch 5, worin das Mittel zum Sammeln und Wiedereinspritzen von gasförmigem Siliciumoxid so eingerichtet ist, daß es dazu führt, daß das gasförmige Siliciumoxid vor der Wiedereinspritzung in den Bogenbereich kondensiert.

7. Vorrichtung nach Anspruch 6, worin das Mittel zum Sammeln und Wiedereinspritzen von gasförmigem Siliciumoxid innerhalb eines Materialzufuhrdurchgangs des Mittels zum Einspritzen des dritten Materials angeordnet ist und dazu führt, daß das gasförmige Siliciumoxid auf Partikel in dem Strom des dritten Materials vor der Wiedereinspritzung in den Bogenbereich kondensiert.

8. Vorrichtung nach Anspruch 3, worin das Mittel zum Einspritzen des dritten Materials, eine Einspritzdüse umfaßt, die in die Reaktionskammer eingesetzt ist und ein inneres Ende auf den Bogenbereich gerichtet hat.

9. Vorrichtung nach Anspruch 8, worin die Einspritzdüse sich horizontal durch eine Seitenwand des Ofenkörpers erstreckt.

10. Vorrichtung nach Anspruch 3, worin das Paar von Bogenelektroden in vertikaler Ausrichtung angeordnet ist.

11. Vorrichtung nach Anspruch 3, worin das Paar von Bogenelektroden schräg zu der horizontalen Ebene und zueinander liegt.

12. Vorrichtung nach Anspruch 8, worin die Einspritzdüse sich vertikal durch einen Boden des Ofenkörpers erstreckt.

13. Vorrichtung nach Anspruch 3, worin das Paar von Bogenelektroden in horizontaler Ausrichtung angeordnet ist.

## Revendications

1. Procédé de préparation de silicium métallique de haute pureté à partir d'un premier matériau choisi parmi le groupe comprenant le carbone et une substance contenant du carbone, d'un second matériau choisi parmi le groupe comprenant le carbure de silicium et la silice et d'un troisième matériau tel que de la silice et de l'oxyde de silicium pulvérulents,comportant les étapes consistant à:
former un mélange desdits premier et second matériaux sous forme de boulettes et charger ledit mélange dans une chambre de réaction;
générer un arc électrique en une région d'arc entre les extrémités d'une paire d'électrodes en vis-à-vis l'une de l'autre et disposées dans une partie inférieure de ladite chambre de réaction;
chauffer au moins une partie de ladite chambre de réaction et dudit mélange chargé à l'aide d'un organe de chauffage extérieur situé au-dessus de ladite région d'arc, en créant ainsi une région à température élevée;
injecter un courant dudit troisième matériau sous forme d'aérosol à travers ladite région à température élevée dans ladite région d'arc pour provoquer dans ladite région d'arc des réactions de génération de SiO gazeux entre ledit troisième matériau et lesdits premier ou second matériaux pour provoquer dans ladite chambre, au-dessus de ladite région d'arc, des réactions de génération de SiC solide entre ledit SiO gazeux généré dans ladite région d'arc et ledit premier matériau, et pour provoquer des réactions de génération de Si métallique en fusion dans ladite chambre au-dessus de ladite région d'arc entre ledit SiO gazeux et ledit SiC solide générés dans ladite chambre de réaction;
évacuer les gaz qui sont introduits pour injecter ledit courant dudit troisième matériau et les gaz générés par lesdites réactions dans ladite chambre de réaction par l'intermédiaire d'un orifice de sortie au sommet de ladite chambre de réaction; et
décharger le Si métallique en fusion généré dans ladite chambre de réaction à travers un orifice de sortie à la base de ladite chambre.

2. Procédé selon la revendication 1, comportant en outre une étape de collecte dudit SiO gazeux généré dans ladite chambre de réaction et évacué à travers ledit orifice de sortie et de réinjection dudit SiO recueilli dans ladite région d'arc.

3. Dispositif de préparation de silicium métallique de haute pureté par le procédé selon la revendication 1, comportant:
un four délimitant une chambre de réaction (12) comportant à sa partie inférieure une paire d'électrodes d'arc en vis-à-vis l'une de l'autre (14,16;30,16;40,42; 50,52;62,64), lesdites électrodes définissant entre leurs extrémités respectives une région d'arc de dimensions connues (18,44,54), des moyens (20,32,46,56,60) pour injecter directement un courant dudit troisième matériau sous forme d'aérosol à travers une région à température élevée dans ladite région d'arc, un orifice de sortie (26) de silicium métallique en fusion qui est situé à la base dudit four et relié à l'extérieur dudit four, un organe de chauffage extérieur (28) pour créer ladite région à température élevée, situé au-dessus de ladite région d'arc, et pour chauffer une partie de ladite chambre de réaction conjointement avec ledit mélange, et un orifice de sortie (72) de gaz situé au sommet de ladite chambre de réaction.

4. Dispositif selon la revendication 3, dans lequel ledit organe de chauffage extérieur (28) effectue un chauffage par induction à haute fréquence.

5. Dispositif selon la revendication 3, comportant en outre des moyens (66,76) pour recueillir ledit oxyde de silicium gazeux généré dans ladite chambre de réaction et évacué à travers ledit orifice de sortie de gaz et pour réinjecter celui-ci dans ladite région d'arc.

6. Dispositif selon la revendication 5, dans lequel lesdits moyens de collecte et de réinjection d'oxyde de silicium gazeux sont aptes à provoquer une condensation de l'oxyde de silicium gazeux avant réinjection dans ladite région d'arc.

7. Dispositif selon la revendication 6, dans lequel lesdits moyens de collecte et de réinjection d'oxyde de silicium gazeux sont disposés à l'intérieur d'un passage d'alimentation en matériau desdits moyens d'injection du troisième matériau et provoquent une condensation dudit oxyde de silicium gazeux en particules dans ledit courant dudit troisième matériau avant réinjection dans ladite région d'arc.

8. Dispositif selon la revendication 3, dans lequel lesdits moyens d' injection du troisième matériau comportent une buse d'injection introduite dans ladite chambre de réaction et possédant une extrémité intérieure dirigée vers ladite région d'arc.

9. Dispositif selon la revendication 8, dans lequel ladite buse d'injection s'étend horizontalement à travers une paroi latérale dudit four.

10. Dispositif selon la revendication 3, dans lequel ladite paire d'électrodes d'arc sont disposées verticalement alignées.

11. Dispositif selon la revendication 3, dans lequel ladite paire d'électrodes d'arc sont disposées obliquement par rapport à l'horizontale et entre elles.

12. Dispositif selon la revendication 8, dans lequel ladite buse d'injection s'étend verticalement à travers le fond dudit four.

13. Dispositif selon la revendication 3, dans lequel ladite paire d'électrodes d'arc sont disposées horizontalement alignées.
